# EUROPEAN PATENT APPLICATION

(11) **EP 2 204 390 A2**
(43) Date of publication of application: **07.07.2010**
(21) Application number: 09180814.7
(22) Date of filing: 28.12.2009
(51) Int. Cl.: C08F 218/08, C08F 218/10

(54) **Vinyl acetate/aromatic vinyl ester copolymer binder resins**

(30) Priority: 29.12.2008 US 203753 P
(71) Applicant: Celanese Emulsions GmbH, 61476 Kronberg/Ts. (DE)
(72) Inventor: McLennan, Alistair John, 61462, Koenigstein (DE); Zeimentz, Peter M., 50667 Köln (DE)
(74) Representative: von Kreisler Selting Werner

(57) **Abstract**

An emulsion interpolymer polymer composition suitable as a binder resin for fibrous substrates such as woven or nonwoven products including textiles, apparel in general, papers, scrim, engineered fabrics, glass or other mineral fibers, roofing or flooring materials, comprises a copolymer obtainable by reacting: a) 3-97 pphwm of vinyl acetate; b) 97-3 pphwm of at least one vinyl ester of an aromatic carboxylic acid; and c) 10-0.1 pphwm of at least one functional monomer and optionally further comonomers.

## Description

### Claim for Priority

This Application is based upon United States Provisional Patent Application Serial No. 61/203,753 entitled Vinyl Acetate /Aromatic Vinyl Ester Copolymers and Uses Thereof, filed on December 29, 2008. The priority of United States Provisional Patent Application Serial No. 61/203,753 is hereby claimed and its disclosure incorporated into this application by reference.

### Field of the Invention

This invention relates, in part, to the preparation of novel copolymers of vinyl acetate, aromatic vinyl esters such as vinyl benzoate, and functional monomers, including self-cross-linking monomers such as N-methylolacrylamide. The copolymers may optionally contain one or more additional comonomers selected from, for example, vinyl esters of α-monosubstituted fatty acids, vinyl esters of neoalkanoic acids and α-olefins. Such polymers have utility in a variety of applications, especially as binders for use in fibrous products.

### Background of the Invention

United States Patent No. 5,545,684 (equivalent to EP 0 686 682 A1) to *Jakob et al*. discloses a polyvinyl ester emulsion for adhesives having improved adhesive properties, wherein the adhesive can be used for bonding porous and non-porous substrates. Examples of suitable monomers for these homo- or copolymeric polyvinyl esters can include vinyl acetate and vinyl 2-ethylhexanoate which can also be present in combination in the polyvinyl ester. The proportion of these vinyl esters in the polymer is generally at least 50% by weight, preferably at least 75% by weight. The polymers are prepared in the presence of polymeric protective colloids.

Japanese Patent Application Publication No. 2004-217724 of Seiji et al. discloses an aqueous emulsion which has excellent water resistance, polymerization stability and storage stability and a process to prepare the emulsion polymer. The vinyl ester monomer that can be used is vinyl acetate with the addition of ethylene. The emulsion can be used as an adhesive for paper coatings, general woodwork, and as a binder for nonwoven products.

United States Patent Application Publication No. 2002/0065361 of Tanimoto et al. discloses a polyvinyl ester resin emulsion having a high viscosity and good water resistance. The emulsion is produced in a method of polymerizing a vinyl ester monomer in the presence of polyvinyl alcohol serving as the protective colloid and in the presence of a water-insoluble, hydroxyl-group containing compound, and can be used as an adhesive that can be readily formed in to transparent films. Vinyl esters that can be used in the invention include vinyl formate, vinyl acetate, vinyl propionate, and vinyl pivalate. Ethylene can be added to the emulsion in the range of 3-35 wt% to improve water resistance and heat resistance.

United States Patent Application Publication No. 2002/0069965 of Koehler et al. discloses a process for preparing adhesives wherein the adhesive has improved adhesion. The adhesive is made by polymerizing a comonomer mixture comprising the following of: a) one or more monomers from the group consisting of the vinyl esters of unbranched and branched carboxylic acids of 1 to 10 carbon atoms, the esters of acrylic acid and methacrylic acid with branched and unbranched alcohols of 1 to 12 carbon atoms, vinyl aromatic compounds, vinyl halides and alpha-olefins, and b) from 0.01 to 50% by weight, based on the overall weight of the comonomers, of a vinyl ester of alpha-branched tertiary monocarboxylic acids of 11 carbon atoms, in the presence of c) from 0.1 to 15% by weight, based on the overall weight of the comonomers, of polyvinyl alcohol. Some of the preferred vinyl esters can be vinyl acetate, VeoVa™ 9/10, and vinyl 2-ethylhexanoate.

EP 0 851 015 of Schilling et al. discloses an adhesive having low VOC that is based on a polyvinyl alcohol stabilized vinyl ester ethylene copolymer dispersion comprized of 100 parts by weight polyvinyl ester portion, 10 to 100 parts by weight vinyl ester ethylene copolymer, and 1 to 10 parts by weight part or full-soaped polyvinyl alcohol with a viscosity from 40 to 120 mPa·s and a degree of hydrolysis from 85 to 100 mol%. The polyvinyl ester portion contains 80-100 wt. % of several vinyl esters of branched or unbranched alkyl carbonic acids with 1-18 carbon atoms and 0-20 wt. % other or multiple ethylenic unsaturated monomer units.

United States Patent No. 5,969,065 to Jakob discloses a redox catalyst system for the initiation of emulsion polymerization of vinyl compounds where the reducing agent comprises at least a bifunctional aldehyde having at least 3 carbon atoms which is completely masked as a bisulfite adduct. Some of the vinyl esters that are compatible with the catalysts are homopolymers or copolymers of vinyl esters comprising the following monomer groups: a) vinyl esters, in particular, those vinyl esters having from 1 to 18 carbon atoms in the acid radical, for example, vinyl formate, vinyl acetate, vinyl propionate, vinyl isobutyrate, vinyl pivalate, vinyl 2-ethylhexanoate, vinyl esters of saturated, branched monocarboxylic acids having from 9 to 10 carbon atoms in the acid radical, vinyl esters of relatively long-chain, saturated or unsaturated fatty acids, for example, vinyl laurate, vinyl stearate, and also vinyl esters of benzoic acid and substituted derivatives of benzoic acid, for example, vinyl p-tert-butylbenzoate. Among these, particular preference is given to the exclusive use of vinyl acetate to form a homopolymer.

United States Patent No. 6,730,718 to Jakob discloses a discoloration resistant dispersion adhesive with a prolonged pot life. Adhesives comprising at least a) one homopolymeric and/or copolymeric polyvinyl ester, b) one polymeric protective colloid, c) one water-soluble compound which can be complexed with the polymeric protective colloids, and d) at least two, at least partly masked polyaldehydes which release aldehyde groups again in acidic media, wherein at least one masked polyaldehyde is a glyoxal derivative and at least one other masked polyaldehyde is a derivative of a polyaldehyde having at least 3 carbon atoms have been found to have a long pot life and a high level of water resistance and color constancy. Examples of suitable monomeric units for the homo- and copolymeric polyvinyl esters include, for example, vinyl acetate, vinyl 2-ethylhexanoate, and vinyl isobutyrate.

United States Patent Application Publication No. 2007/0184732 of Lunsford et al. discloses a high strength polyvinyl acetate binder utilized for fibrous substrates. The composition of the binder is comprised of water and an emulsion resin comprising from 50 pphwn to 100 pphwn vinyl acetate monomer units and from 4 to 15 pphwn post-crosslinking monomer composition.

United States Patent Application Publication No. 2005/0032970 of Jakob et al. discloses water resistance adhesives comprised of, for example: a) a copolymer based on one or more poly(vinyl esters), preferably based on poly(vinyl acetate), the poly(vinyl ester) additionally containing 0.01%-1.5% by weight, preferably 0.01%-1%, based on the total amount of all monomers, of one or more crosslinkable comonomer units containing N-methylol groups, preferably derived from N-methylol(meth)acrylamide, b) 1%-20% by weight, based on the total amount of all monomers, of at least one protective colloid, preferably poly(vinyl alcohol), c) from 0.001 % to 1% by weight, based on the amount of the polymer dispersion, of at least one derivative partly etherified at least with one or more alkanols and from the group of hydroxymethylated cyclic ethyleneureas, hydroxymethylated cyclic propyleneureas, hydroxymethylated bicyclic glyoxal diureas or hydroxymethylated bicyclic malonaldehyde diureas, and d) at least one acidic metal salt and/or an acid sufficient amount to establish a pH of 2-6, preferably from 2.5 to 4. The poly(vinyl ester) that can be used are vinyl ester monomers preferably include vinyl formate, vinyl acetate, vinyl propionate, vinyl isobutyrate, vinyl pivalate, and vinyl 2-ethylhexanoate.

EP 1 580 244 of Faust et al. discloses a water-based bicomponent wood adhesive having improved heat resistance and extended pot life. The adhesive is comprised of vinyl acetate and N-methylolacrylamide as a cross-linking agent and also including an aromatic and/or cyclo aliphatic monomer, such as 2-phenoxy ethyl acrylate and/or isobornyl methacrylate, and methyl methacrylate. Additional vinyl esters that can be used are vinyl formate, vinyl isobutyrate, vinyl pivalate, vinyl 2-ethylhexanoate, vinyl esters of saturated, branched monocarboxylic acids having 9 to 10 carbon atoms in the acid radical, such as VeoVa™9 or VeoVa™10, vinyl esters of relatively long-chain, saturated or unsaturated fatty acids, such as, for example, vinyl laurate, vinyl stearate and vinyl esters of benzoic acid and substituted derivatives of benzoic acid, such as vinyl p-tert-butylbenzoate.

United States Patent No. 5,434,216 to Mudge et al. discloses a latex adhesive used for woodworking having improved water, heat, and creep resistance. The composition of the adhesive is based on vinyl acetate / N-methylolacrylamide polymer emulsions which are stabilized with 1.5 to 2.5% by weight of 88% hydrolyzed polyvinyl alcohol and 1 to 4% by weight of 95-99.5% hydrolyzed polyvinyl alcohol, the two alcohols comprising at least 3% by weight of the emulsion solids. The N-methylolacrylamide and vinyl acetate copolymers can also be used in combination with: (1) other vinyl esters including vinyl formate, vinyl propionate, vinyl butyrate, vinyl isobutyrate, vinyl valerate, vinyl 2-ethylheanoate, vinyl isooctanoate, vinyl nonoate, vinyl decanoate, vinyl pivalate, vinyl versatate, and the like; (2) ethylene; (3) alkyl esters of acrylic and methacrylic acid such as methyl acrylate, methyl methacrylate, ethyl acrylate, ethyl methacrylate, etc.; (4) substituted or unsubstituted mono and dialkyl esters of αβ-unsaturated dicarboxylic acids such as the substituted and unsubstituted mono and dibutyl, mono and diethyl maleate esters as well as the corresponding fumarates, itaconates and citronates; (5) αβ-unsaturated carboxylic acids such as crotonic, acrylic, methacrylic, fumaric, maleic, itaconic and citraconic acids.

JP 11228774 discloses a resin reported to have hydrolysis resistance obtained by polymerizing vinyl acetate with an alkyl benzoate. The resin is mixed with an antioxidant, an ultraviolet absorber and other additives.

It is an object of the present invention to provide improved copolymers obtainable by reacting vinyl acetate, vinyl esters of aromatic carboxylic acids, such as vinyl benzoate, and functional monomers such as N-methylolacrylamide, and optionally comprising additional monomer units and/or crosslinking functionalities, as well as products including such copolymers, to improve properties such as, for example, solvent resistance, dry strength, wet strength, hydrophobicity, alkaline aging resistance and so forth in the articles and compositions as described more fully hereinafter.

### Summary of the Invention

A polymer binder resin according to the invention comprises a copolymer obtainable by reacting: a) 1-99 pphwm, preferably 3-97 pphwm, more preferably 30-95 pphwm of vinyl acetate; and b) 99-1 pphwm, preferably 97-3 pphwm, more preferably 60-4 pphwm of at least one vinyl ester of an aromatic carboxylic acid, such as vinyl benzoate along with 10-0.1 pphwm, preferably 8-2 pphwm, of at least one functional, preferably self-crosslinking monomer. Optionally, comonomers a) - c) are reacted in the presence of further comonomers such as d) at least one vinyl ester of α-monosubstituted fatty acid, such as 2-ethylhexanoate, and/or e) at least one α-olefin, such as ethylene, and/or f) vinyl ester of neoalkanoic acid and/or g) other comonomers. Preferred ranges of vinyl ester of α-monosubstituted fatty acid can include from 50-1 pphwm or from 30-5 pphwm. Preferred ranges of α-olefin can include from 35-5 pphwm or from 25-5 pphwm. Preferred ranges of vinyl ester of neoalkanoic acid can include from 45-5 pphwm or from 30-10 pphwm. The copolymer is composed and synthesized so as to be especially useful for binders for fibrous substrates such as woven or nonwoven products including textiles, apparel in general, papers, scrim, engineered fabrics, glass fibers or other mineral fibers, roofing or flooring materials.

In some embodiments, incorporation of vinyl benzoate and vinyl 2-ethylhexanoate into a vinyl acetate monomer backbone gives lower water absorption, better water spot times, lower blanching, and higher contact angles. Inclusion of ethylene into the vinyl acetate monomer/vinyl benzoate combination to create a terpolymer with improved toughness. Further details and aspects of the invention will become apparent from the discussion which follows.

### Detailed Description of the Invention

The invention is described in detail below with reference to several embodiments and numerous examples. Such discussion is for purposes of illustration only. Modifications to particular examples within the spirit and scope of the present invention will be readily apparent to one of skill in the art. Terminology used herein is given its ordinary meaning consistent with the exemplary definitions herein.

The term "functional monomer" includes self-crosslinking monomers as well as monomers with functional moieties, including stabilizing moieties such as ionic groups or hydroxyl groups capable of reacting with a crosslinking material and so forth.

The abbreviation "pphwm" refers to parts per hundred weight monomer based on monomer supplied to the reaction medium unless otherwise indicated.

The terminology "alkyl (meth)acrylate" refers to alkyl acrylates and alkyl methacrylates, typically C₁-C₁₂ alkyl such as butyl acrylate and so forth.

Other terminology and abbreviations are noted below.

Polymers of this invention are typically predominantly comprised of vinyl acetate monomer (VA) and vinyl esters of aromatic carboxylic acids such as vinyl benzoate (VB) in many embodiments. 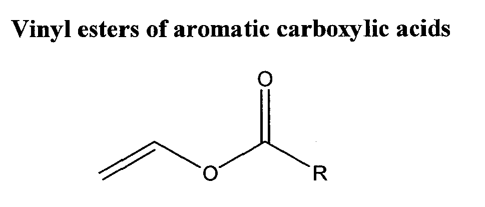 Vinyl benzoate is where R = phenyl. R can be any C₆-C₁₂ aromatic moiety such as naphthalyl, biphenyl etc. whose rings may be further substituted with halogen, alkyl, nitro, amine, and so forth. Further description of suitable aromatic carboxylic acid esters is found in WO 2005/098200, the disclosure of which is incorporated herein by reference.

Postcrosslinking comonomers (referred to in the art also as self-crosslinking monomers) are the most preferred functional monomers utilized to make the copolymers of the invention. These monomers include acrylamidoglycolic acid (AGA), methyl methacrylamidoglycolate (MMAG), N-methylolacrylamide (NMA), N-methylolmethacrylamide (NMMA), allyl-N-methylolcarbamate, alkyl ethers such as the isobutoxy ethers or esters of N-methylolacrylamide, of N-methylolmethacrylamide and of allyl N-methylolcarbamate.

Optional additional monomers such as monomer units from vinyl esters of α-monosubstituted fatty acids such as vinyl 2-ethylhexanoate (V2EH) are provided in some embodiments: 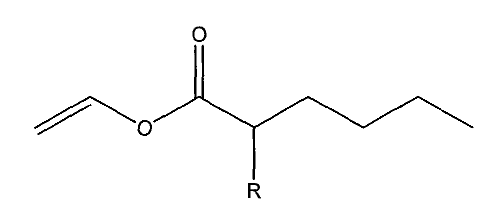 Vinyl 2-ethylhexanoate is where R = ethyl.

More generally, any α-monosubstituted alkanoic acid vinyl ester may be used, for example, alkanoic acid esters of the formula: 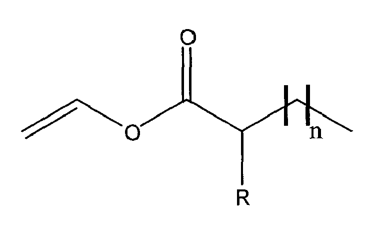 R = straight chain, branched or cyclic alkyl groups, for example, 2-alkylbutanoic acid (n=1) or 2-alkylpropanoic acid is where n=0; n is suitably 2-20. Suitable branched acid alkanoates may also be found in United States Patent No. 5,371,137 to Blincow et al., the disclosure of which is incorporated herein by reference.

Additional monomers such as α-olefin monomers and/or neoalkanoic acid vinyl esters are also provided. Examples of suitable α-olefin monomers include ethylene, propylene, α-butylene, α-pentylene, α-hexylene, α-octylene and so forth.

Preferred polymers include emulsion interpolymers as described herein, however the optional inclusion of other comonomers is contemplated. Other potentially useful comonomers include 1-heptene, butadiene, hexadiene, isoprene, styrene, methyl styrene, divinyl benzene and the like. Representative of still other ethylenically unsaturated monomers include halogenated monomers such as vinyl chloride, vinylidene chloride, chloroprene, chlorostyrene and the like.

The inventive copolymers may be made by a variety of techniques by which vinyl acetate polymers are made including by bulk, solution, suspension and emulsion processes as is described in the Kirk-Othmer Encyclopedia of Chemical Technology, 4th Ed., Vol. 24, pp. 954-963 (Wiley 1996), the disclosure of which is incorporated herein by reference. The preparation of the inventive compositions can be carried out using continuous or discontinuous processes of free-radical emulsion polymerization. The polymerization may be conducted with the assistance of customary reaction vessels such as loop or stirred reactors. Preference is given to using discontinuous processes such as batch, combined batch/feed stream, pure feed stream processes or feed stream processes onto nucleating particles.

In these processes, water-soluble and/or oil-soluble initiator systems such as peroxodisulfates, azo compounds, hydrogen peroxide, organic hydroperoxides or dibenzoyl peroxide are employed. These may be used either by themselves or in combination with reducing compounds such as Fe (II) salts, sodium pyrosulfite, sodium hydrogen sulfite, sodium sulfite, sodium dithionite, sodium formaldehydesulfoxylate, ascorbic acid, as a redox catalyst system. The emulsifiers, and /or where appropriate, protective colloids, additives and/or auxiliaries may be added before, during or after the polymerization. Examples of emulsifiers include alkyl aryl polyglycol ethers and alkyl polyglycol ethers each preferably having from 8 to 50 mol of ethylene oxide units per molecule, block copolymers of ethylene oxide with propylene oxide, alkylsulfonates or alkyarylsulfonates, alkyl sulfates, alkyl and aryl ether sulfates and phosphates each having preferably from 8 to 18 carbon atoms in the lipophilic part and up to 50 ethylene oxide or propylene oxide units in the hydrophilic part, and also monoesters or diesters of sulfosuccinic acid or alkylphenols each having preferably from 8 to 18 carbon atoms in the alkyl radical. A preferred type of emulsifier does not contain linear alkyl phenol units in the lipophilic part.

Optionally, the polymeric compositions of the invention are grafted onto a polyhydroxy polymer, for example, polyvinyl alcohol (PVOH), i.e.:

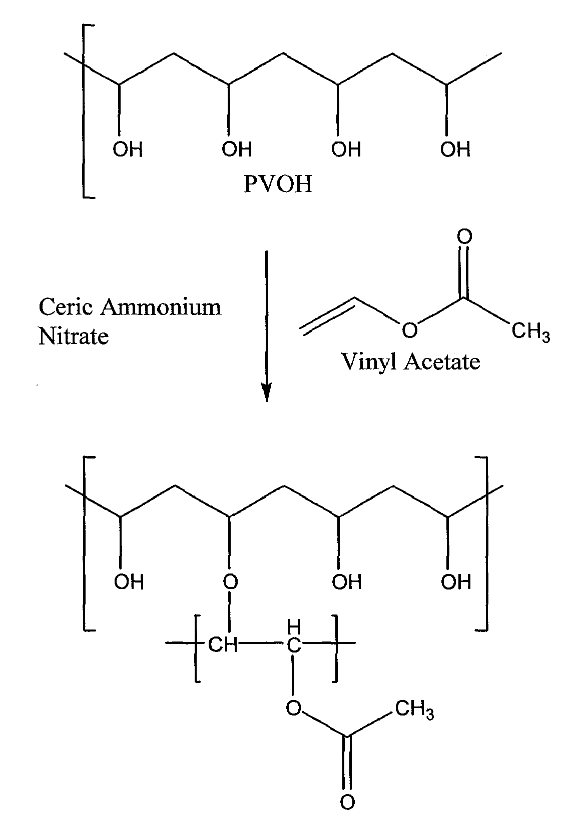

As is described in United States Patent No. 5,354,803 to Dragner et al., the disclosure of which is incorporated herein by reference. Any suitable technique for grafting the composition with a suitable polymer may be used. Other suitable polyhydroxy compounds for grafting may include sugars, cellulose and starch.

Representative of esters of ethylenically unsaturated carboxylic acids which may also be used include alkyl acrylates and methacrylates wherein the alkyl group contains 1-12 carbon atoms and esters of such acids as butenoic, maleic, fumaric, itaconic and the like. Representative of other esters which have an ethylenic unsaturation and are preferred include vinyl formate, vinyl versatate, and the like. The alkyl acrylates that can be used to prepare the acrylic ester latex binders of this invention include alkyl acrylates and alkyl methacrylates containing 1 to 12, preferably 1 to 10 carbon atoms in the alkyl group. The polymer backbone in the acrylic ester latexes can be either hydrophilic or hydrophobic and it can comprise polymerized soft monomers and/or hard monomers. The soft and hard monomers are monomers which, when polymerized, produce soft or hard polymers, or polymers in between. Preferred soft acrylic ester monomers are selected from alkyl acrylates containing 2 to 8 carbon atoms in the alkyl group and include ethyl acrylate, propyl acrylate, n-butyl acrylate, and 2-ethylhexyl acrylate. The hard acrylic ester monomers are selected from alkyl methacrylates containing up to 3 carbon atoms in the alkyl group and from non-acrylic monomers such as styrene and substituted styrenes, acrylonitrile, vinylchloride, and generally any compatible monomer the homopolymer of which has a Tg above 50 °C. Preferred acrylic ester monomers are selected from alkyl methacrylates containing 1 to 12 carbon atoms in the alkyl group, especially methyl methacrylate. See United States Patent No. 5,021,529 to Garrett.

Further monomers copolymerizable with vinyl esters are ethylenically unsaturated, ionic monomers, for example compounds which bear at least one carboxylic acid, sulfonic acid, phosphoric acid or phosphonic acid group directly adjacent to the double bond unit, or else are bonded thereto via a spacer. Examples include:
α,β-unsaturated C₃-C₈-monocarboxylic acids, α,β-unsaturated
C₅-C₈-dicarboxylic acids and anhydrides thereof, and monoesters of
α,β-unsaturated C₄-C₈-dicarboxylic acids.

Preference is given to unsaturated monocarboxylic acids, for example acrylic acid, methacrylic acid, and crotonic acid and the anhydrides thereof; unsaturated dicarboxylic acids, for example maleic acid, fumaric acid, itaconic acid and citraconic acid and the monoesters thereof with C₁-C₁₂-alkanols such as monomethyl maleate and mono-n-butyl maleate. Further preferred ethylenically unsaturated ionic monomers are ethylenically unsaturated sulfonic acids, for example vinylsulfonic acid, 2-acrylamido-2-methylpropanesulfonic acid, 2-acryloyloxy- and 2-methacryloyloxyethanesulfonic acid, 3-acryloyloxy- and 3-methacryloyloxypropanesulfonic acid and vinylbenzenesulfonic acid, and ethylenically unsaturated phosphonic acids, for example vinylphosphonic acid.

In addition, as well as the acids mentioned, it is also possible to use the salts thereof, preferably the alkali metal salts thereof or the ammonium salts thereof and especially the sodium salts thereof, for example the sodium salts of vinylsulfonic acid and of 2-acrylamidopropanesulfonic acid.

The ethylenically unsaturated free acids mentioned are present in aqueous solution at pH 11 predominantly in the form of their conjugate bases in anionic form and can, like the salts mentioned, be referred to as anionic monomers.

Also suitable as functional monomers are cross-linking epoxide-functional comonomers such as glycidyl methacrylate and glycidyl acrylate. Further examples are silicon-functional comonomers such as acryloxy-propyltri(alkoxy)silanes and methacryloxypropyltri(alkoxy)silanes, vinyltrialkoxysilanes and vinylmethyldialkoxysilanes, with alkoxy groups which can be present being, for example, methoxy, ethoxy and ethoxypropylene glycol ether radicals. Mention may also be made of useful monomers having hydroxy or CO groups, for example, hydroxyalkyl methacrylates and acrylates such as hydroxyethyl, hydroxypropyl or hydroxybutyl acrylate or methacrylate and also compounds such as diacetoneacrylamide and acetylacetoxyethyl acrylate or methacrylate, see United States Patent Application Publication No. 2007/0112117 of Weitzel.

Crosslinkers that can be used in conjunction with the present invention are also precrosslinking comonomers such as multiply ethylenically unsaturated comonomers, for example divinyl adipate, diallyl maleate, allyl methacrylate or triallyl cyanurate and the like.

The polymer compositions in the present invention may be used in connection with emulsions in general; paints, including high pigment volume paints and other decorative coatings; adhesives for porous substrates such as wood or non-porous substrates such as metals, plastics or glass; binders for fibrous substrates such as fibrous substrates such as woven or nonwoven products including textiles, apparel in general, papers, scrim, engineered fabrics, glass or other mineral fibers, roofing or flooring materials; construction compositions including cementitious compositions, caulks and sealants; functional coatings for waterproofing and so forth; powders such as redispersible powders for waterproofing, adhesives and the like. Among the properties which may be enhanced are: wet scrub resistance; alkaline resistance; dimensional/Structure integrity ("Verschiebefestigkeit"); solvent resistance; dry tensile; wet bond strengths; wet bond strengths at elevated temperatures setting speed; adhesion to nonpolar substrates; impact resistance; thermal stability; strand integrity; lower water absorption; increased hydrophobicity; higher wet tensile strength and better water spot times.

Furthermore, there is provided in accordance with the present invention, a polymer composition suitable for use as a binder in a fibrous product comprising: a) 1-99 pphwm, preferably 5-95 pphwm of vinyl acetate monomer units; and b) 99-1 pphwm, preferably 95-1 pphwm of monomer units from vinyl esters of an aromatic carboxylic acid. Generally, the resins are composed and synthesized so as to be useful for one or more of: emulsions, in general; paints, including high pigment volume paints and other decorative coatings; adhesives for porous substrates such as wood or non-porous substrates such as metals, plastics or glass; binders for fibrous substrates such as woven or nonwoven products including textiles, apparel in general, papers, scrim, engineered fabrics, glass or other mineral fibers, roofing or flooring materials; construction compositions including cementitious compositions; functional coatings for waterproofing and so forth; powders such as redispersible powders for waterproofing, adhesives and the like. In some cases the polymer composition includes from 10-90 pphwm of vinyl acetate monomer units. In some preferred embodiments, the polymer composition includes from 50-1, preferably from 50-5 pphwm monomer units from a vinyl ester of an aromatic carboxylic acid, such as vinyl benzoate monomer units. Optionally, there is further included c) 50-1 pphwm of monomer units from vinyl esters of α-monosubstituted fatty acids, such as vinyl 2-ethyl hexanoate monomer units, which may be incorporated at levels of 50-5 pphwm. In many cases, it is preferred to include from 80-35 pphwm of vinyl acetate in the reaction medium.

In another aspect, there is provided a polymer composition comprising: a) 1-99 pphwm, preferably 5-95 pphwm of vinyl acetate monomer units; and b) 99-1 pphwm, preferably 95-5 pphwm of monomer units from vinyl esters of an aromatic carboxylic acid; and c) 40-1, preferably 35-5 pphwm of α-olefin monomer units. In this and the foregoing embodiments, the polymer may contain from 90-10 pphwm monomer units from a vinyl ester of an aromatic carboxylic acid. The α-olefin monomer units are C₂ to C₄ α -olefin monomer units, preferably ethylene monomer units.

In still yet another aspect of the invention there is provided a polymer composition comprising: a)1-99 pphwm, preferably 5-95 pphwm of vinyl acetate monomer units; b) 99-1 pphwm, preferably 95-5 pphwm of monomer units from vinyl esters of an aromatic carboxylic acid; and c)10-0.1 pphwm of functional monomer units having generally the features noted above. The functional monomer units are typically crosslinking monomer units such as self-crosslinking monomer units and may be present in an amount of from 8-0.5 pphwm.

Another aspect of the invention is directed to a polymer composition comprising: a) 1-99 pphwm, preferably 5-95 pphwm of vinyl acetate monomer units; b) 50-1 pphwm of monomer units from vinyl esters of an aromatic carboxylic acid; c) 50-1 pphwm of monomer units from vinyl esters of α-monosubstituted fatty acids; and d) 10-0.1 pphwm of functional monomer units. Typically, the α-monosubstituted monomer units are vinyl 2-ethyl hexanoate monomer units which may be present in amounts of from 50-5 pphwm.

Another polymer composition of the invention includes: a) 1-99 pphwm, preferably 5-95 pphwm of vinyl acetate monomer units; b) 99-1 pphwm, preferably 95-5 pphwm of monomer units from vinyl esters of an aromatic carboxylic acid; and c) from 45-5 pphwm of monomer units from vinyl esters of neoalkanoic acid, generally of the structural formula: 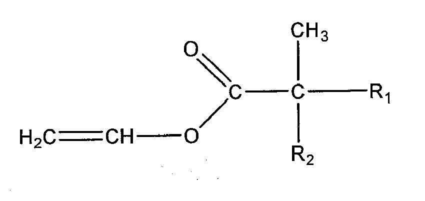 where R₁ and R₂ are alkyl groups which together may collectively contain from about 6-8 carbon atoms, preferably, wherein R₁ and R₂ collectively contain 7 carbon atoms.

Still yet another polymer composition of the invention includes: a) 1-99 pphwm, preferably 5-95 pphwm of vinyl acetate monomer units; b) 50-1 pphwm of monomer units from vinyl esters of an aromatic carboxylic acid; c) 50-1 pphwm of monomer units from vinyl esters of α-monosubstituted fatty acids; d) 40-1, preferably 35-5 pphwm of α-olefin monomer units; and e) 10-0.1 pphwm of functional monomer units.

Yet still another polymer composition combines: a) 1-99 pphwm, preferably 5-95 pphwm of vinyl acetate monomer units; b) 99-1 pphwm, preferably 95-5 pphwm of monomer units from vinyl esters of an aromatic carboxylic acid; c) from 45-5 pphwm of monomer units from vinyl esters of neoalkanoic acid; and d) from 10-0.1 pphwm functional monomer units.

The foregoing polymer compositions may be incorporated into any article or composition or used in the manufacture of: emulsions, in general; paints, including high pigment volume paints and other decorative coatings; adhesives for porous substrates such as wood or non-porous substrates such as metals, plastics or glass; binders for fibrous substrates such as woven or nonwoven products including textiles, apparel in general, papers, scrim, engineered fabrics, glass or other mineral fibers, roofing or flooring materials as well as the aforesaid fibrous products; construction compositions including cementitious compositions; functional coatings for waterproofing and so forth; powders such as redispersible powders for waterproofing, adhesives and the like. Likewise, any of the polymer compositions may be grafted to a polyhydroxy polymer to form a graft copolymer.

### Examples

The following examples are presented to further illustrate the present invention and should not be taken as limiting the invention. The parts and percentages indicated in the examples are by weight unless noted otherwise.

### Abbreviations:

VA: Vinyl acetate monomer; inhibitor content 3 - 5 ppm HQ; obtained from Celanese Chemicals Europe GmbH; used as supplied, unless otherwise indicated;
VB: Vinyl benzoate, stabilized with 40 ppm MEHQ; available from Japan VAM and Poval Co., Ltd.; used as supplied, unless otherwise indicated;
V2EH: Vinyl 2-ethyl hexanoate monomer, stabilized with 20 ppm MEHQ, available from Japan VAM and Poval Co, Ltd; used as supplied, unless otherwise indicated;

### E: Ethylene monomer.

NMA-LF: a blend of N-methylolacrylamide/acrylamide (48% aq. solution typically) commercially available from Cytec Industries.

Vinyl esters of neoalkanoic acids have the following general structure: 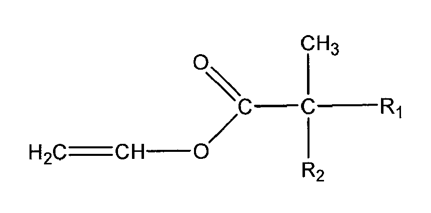 where R₁ and R₂ are alkyl groups which together may typically collectively contain from about 6-8 carbon atoms. Veo Va™ neoalkanoic vinyl esters are available from Hexion Specialty Chemicals of Columbus, Ohio. In VeoVa™ 9, R₁ and R₂ together contain about 6 carbon atoms. In VeoVa™ 10, R₁ and R₂ together contain about 7 carbon atoms. In VeoVa™ 11, R₁ and R₂ together contain about 8 carbon atoms. Inclusion of neoalkanoic acid vinyl esters in polymer systems introduces hydrophobicity to the polymer that can provide hydrocarbon solubility or adhesion to low-energy surfaces and also add steric bulk to the polymer providing it with greater hydrolytic stability.

HLB: HLB numbers are indicative of a surfactant's emulsification behavior and relate to the balance between the hydrophilic and lipophilic (hydrophobic) portions of the molecule. HLB numbers are further described in Griffin, W., C., J. Soc. Cosmet. Chem. 1, 311 (1949).

### Example Set 1

### Binders for Engineered Fabric, Glass Fiber for Roofing and Flooring Products and Textiles/Nonwovens

### Polymerization Procedures

### Example 1-1: Preparation of a Polymer comprising VA/VB/NMA-LF 66.3/30.3/3.4

An aqueous solution was prepared by the addition of 1.32 g of a 30% aqueous solution of a secondary alkane sulfonate anionic surfactant, (Hostapur^{™} SAS 30 from Clariant), 8.64 g of an 80% aqueous solution of an alcohol ethoxylate nonionic surfactant, (Emulan^{™} TO 2080 from BASF), to 874.18 g of deionized water and heated to 50°C while stirring until the surfactants were dissolved. The solution was cooled and 1.75 g of sodium bicarbonate was added. Then the aqueous solution was charged to a 3-liter glass reactor equipped with a stirrer and dropping funnels.

The reactor was heated to 65°C. A first monomer mixture comprising 85.5 g of vinyl acetate and 36.64 g of vinyl benzoate was added to the reactor.

A second monomer mixture comprising 726.5 g of vinyl acetate and 334.56 g of vinyl benzoate was prepared. A second aqueous solution was prepared by the addition of 24.32 g of a 30% aqueous solution of a secondary alkane sulfonate anionic surfactant, (Hostapur^{™} SAS 30 from Clariant), and 18.56 g of an 80% aqueous solution of an alcohol ethoxylate nonionic surfactant, (Emulan^{™} TO 2080 from BASF), to 233.04 g of deionized water and heated to 50°C while stirring until the surfactants were dissolved. After cooling the surfactant solution 87.73 g of an approximately 48% active blend of N-methylolacrylamide and acrylamide, (Cylink^{™} NMA-LF from Cytec), 1.73 g of sodium persulfate and 1.21 g of sodium bicarbonate were added to the aqueous solution. The second monomer mixture and the second aqueous solution were mixed to form a pre-emulsion.

When the reactor temperature stabilized at 65°C, a solution of 2.64 g of sodium persulfate in 19.95 g of deionized water was added. When an exotherm was observed, the temperature was increased to 75°C. At 70°C the addition of the pre-emulsion was commenced to last 4 hours. After the addition was complete, a solution of 0.11 g of sodium persulfate in 5.68 g of deionized water was added and the temperature was increased to 80°C for 1 hour. The reactor was then cooled to 50°C, and a solution of 2.02 g of t-butyl hydroperoxide in 11.95 g of deionized water was added over 10 minutes. Then a solution of 1.53 g of sodium metabisulfite in 11.95 g of water was added over 10 minutes. The reaction mixture was cooled and filtered through a 180µ mesh.

The resultant dispersion had a solids content of 50.4%, viscosity of 137 mPa.s, pH of 4.3, grit, (measured on a 40 µ mesh), of 0.003% and a Tg, (onset, by DSC), of 48.4°C.

### Example 1-2: Preparation of a Polymer comprising VA/VB/NMA-LF 38.6/57.9/3.5

A similar procedure to example 1-1 was followed except that the relative amounts of vinyl acetate, vinyl benzoate and NMA-LF were varied. The resultant dispersion had a solids content of 49.0%, viscosity of 50 mPa.s, pH of 4.2, grit, (measured on a 40 µ mesh), of 0.017% and a Tg, (onset, by DSC), of 60.3 °C

### Example 1-3: Preparation of a Polymer comprising VA/VB/NMA-LF 65/30/5

A similar procedure to example 1-7 was followed except that the vinyl 2-ethylhexanoate was replaced by vinyl benzoate. The resultant dispersion had a solids content of 50.0%, viscosity of 276 mPa.s, pH of 4.3, grit, (measured on a 40 µ mesh), of 0.016% and a Tg, (onset, by DSC), of 47.5°C.

### Example 1-4: Preparation of a Polymer comprising VA/VB/V2EH/NMA-LF 38.5/29.0/29.0/3.5

A similar procedure to example 1-2 was followed except that half of the vinyl benzoate was replaced by vinyl 2-ethylhexanoate. The resultant dispersion had a solids content of 49.6%, viscosity of 195 mPa.s, pH of 4.3, grit, (measured on a 40 µ mesh), of 0.023% and a Tg, (onset, by DSC), of 25.2°C.

### Example 1-5: Preparation of a Polymer comprising VA/VB/V2EH/NMA-LF 65/17.5/12.5/5

An aqueous solution was prepared by the addition of 1.33 g of a 30% aqueous solution of a secondary alkane sulfonate anionic surfactant, (Hostapur^{™} SAS 30 from Clariant), 8.19 g of an 80% aqueous solution of an alcohol ethoxylate nonionic surfactant, (Emulan^{™} TO 2080 from BASF), to 908.5 g of deionized water and heated to 50°C while stirring until the surfactants were dissolved. The solution was cooled and 1.76 g of sodium bicarbonate was added. Then the aqueous solution was charged to a 3-liter glass reactor equipped with a stirrer and dropping funnels.

The reactor was heated to 65°C. A first monomer mixture comprising 85.41 g of vinyl acetate, 21.34 g of vinyl benzoate and 15.23 g of vinyl 2-ethylhexanoate was added to the reactor.

A second monomer mixture comprising 717.37 g of vinyl acetate, 194.55 g of vinyl benzoate and 138.97 g of vinyl 2-ethylhexanoate was prepared. A second aqueous solution was prepared by the addition of 2.68 g of a 30% aqueous solution of a secondary alkane sulfonate anionic surfactant, (Hostapur^{™} SAS 30 from Clariant), and 33.49 g of an 80% aqueous solution of an alcohol ethoxylate nonionic surfactant, (Emulan^{™} TO 2080 from BASF), to 214.94 g of deionized water and heated to 50°C while stirring until the surfactants were dissolved. After cooling the surfactant solution 128.42 g of an approximately 48% active blend of N-methylolacrylamide and acrylamide, (Cylink^{™} NMA-LF from Cytec), 1.74 g of sodium persulfate and 1.21 g of sodium bicarbonate were added to the aqueous solution. The second monomer mixture and the second aqueous solution were mixed to form a pre-emulsion.

When the reactor temperature stabilized at 65°C, a solution of 2.67 g of sodium persulfate in 20.01 g of deionized water was added. When an exotherm was observed, the temperature was increased to 75°C. At 70°C the addition of the pre-emulsion was commenced to last 4 hours. After the addition was complete, a solution of 0.11 g of sodium persulfate in 5.87 g of deionized water was added and the temperature was increased to 80°C for 1 hour. The reactor was then cooled to 50°C, and a solution of 2.04 g of t-butyl hydroperoxide in 12.01 g of deionized water was added over 10 minutes. Then a solution of 1.54 g of sodium metabisulfite in 12.01 g of water was added over 10 minutes. The reaction mixture was cooled and filtered through a 180µ mesh.

The resultant dispersion had a solids content of 50.0%, viscosity of 212 mPa·s, pH of 4.3, grit, (measured on a 40 µ mesh), of 0.011% and a Tg, (onset, by DSC), of 31.6°C.

### Example 1-6: Preparation of a Polymer comprising VA/VB/V2EH/NMA-LF 65/12.5/17.5/5

A similar procedure to example 1-5 was followed except that the relative amounts of vinyl benzoate and vinyl 2-ethylhexanoate were varied. The resultant dispersion had a solids content of 49.0%, viscosity of 210 mPa.s, pH of 4.3, grit, (measured on a 40 µ mesh), of 0.010% and a Tg, (onset, by DSC), of 24.9°C.

### Example 1-7: Preparation of a Polymer comprising VA/VB/V2EH/NMA-LF 65/15/15/5

An aqueous solution was prepared by the addition of 1.33 g of a 30% aqueous solution of a secondary alkane sulfonate anionic surfactant, (Hostapur^{™} SAS 30 from Clariant), 9.36 g of a 70% aqueous solution of an alcohol ethoxylate nonionic surfactant, (Emulsogen^{™} EPN 287 from Clariant) to 902.75 g of deionized water and heated to 50°C while stirring until the surfactants were dissolved. The solution was cooled and 1.76 g of sodium bicarbonate was added. Then the aqueous solution was charged to a 3-liter glass reactor equipped with a stirrer and dropping funnels.

The reactor was heated to 65°C. A first monomer mixture comprising 84.41 g of vinyl acetate, 18.29 g of vinyl benzoate and 18.29 g of vinyl 2-ethylhexanoate was added to the reactor.

A second monomer mixture comprising 717.37 g of vinyl acetate, 166.75 g of vinyl benzoate and 166.75 g of vinyl 2-ethylhexanoate was prepared. A second aqueous solution was prepared by the addition of 2.68 g of a 30% aqueous solution of a secondary alkane sulfonate anionic surfactant, (Hostapur^{™} SAS 30 from Clariant), and 38.28 g of a 70% aqueous solution of an alcohol ethoxylate nonionic surfactant, (Emulsogen^{™} EPN 287 from Clariant), to 214.94 g of deionized water and heated to 50°C while stirring until the surfactants were dissolved. After cooling the surfactant solution 128.42 g of an approximately 48% active blend ofN-methylolacrylamide and acrylamide, (Cylink^{™} NMA-LF from Cytec), 1.74 g of sodium persulfate and 1.21 g of sodium bicarbonate were added to the aqueous solution. The second monomer mixture and the second aqueous solution were mixed to form a pre-emulsion.

When the reactor temperature stabilized at 65°C, a solution of 2.67 g of sodium persulfate in 20.0 g of deionized water was added. When an exotherm was observed, the temperature was increased to 75°C. At 70°C the additions of the pre-emulsion was commenced to last 4 hours. After the addition was complete, a solution of 0.11 g of sodium persulfate in 5.87 g of deionized water was added and the temperature was increased to 80°C for 1 hour. The reactor was then cooled to 50°C, and a solution of 2.04 g of t-butyl hydroperoxide in 12.08 g of deionized water was added over 10 minutes. Then a solution of 1.54 g of sodium metabisulfite in 12.08 g of water was added over 10 minutes. The reaction mixture was cooled and filtered through a 180µ mesh.

The resultant dispersion had a solids content of 48.7%, viscosity of 215 mPa.s, pH of 4.3, grit, (measured on a 40 µ mesh), of 0.002% and a Tg, (onset, by DSC), of 28.6°C.

### Example 1-8: Preparation of a Polymer comprising VA/VB/V2EH/NMA-LF 72.5/10/10/7.5

A similar procedure to example 1-7 was followed except that the vinyl acetate, vinyl benzoate, vinyl 2-ethylhexanoate and NMA-LF ratios were varied. The first aqueous solution was made using only 868.25 g of deionized water. The first monomer mixture comprised 94.16 g of vinyl acetate, 12.18 g of vinyl benzoate and 12.18 g of vinyl 2-ethylhexanoate. The amount of NMA-LF in the second aqueous phase was 192.72 g, while the second monomer mixture comprised 800.06 g of vinyl acetate, 111.16 g of vinyl benzoate and 111.16 g of vinyl 2-ethylhexanoate. The resultant dispersion had a solids content of 48.9%, viscosity of 470 mPa.s, pH of 4.4, grit, (measured on a 40 µ mesh), of 0.003% and a Tg, (onset, by DSC), of 30.4°C.

### Example 1-9: Preparation of a Polymer comprising VA/VB/V2EH/NMA 67/15/15/3

A similar procedure to example 1-7 was followed except that the 48% active blend of N-methylolacrylamide and acrylamide, (Cylink^{™} NMA-LF from Cytec), was replaced by a lower level of a blend that is mainly N-methylol acrylamide, with a much lower level of acrylamide, (Cylink^{™} NMA (48%) from Cytec), and the level of vinyl acetate was increased. The first aqueous solution was made using 930.35 g of deionized water. The amount of vinyl acetate was increased in the first monomer mixture to 87.06 g and in the second monomer mixture to 739.34 g. The amount of NMA (48%) in the second aqueous phase was 77.15 g. The resultant dispersion had a solids content of 49.4%, viscosity of 97 mPa.s, pH of 4.1, grit, (measured on a 40 µ mesh), of 0.005% and a Tg, (onset, by DSC), of 28.9°C.

### Examlpe 1-10: Preparation of a Polymer comprising VA/VB/VeoVaTM 10/NMA-LF 75/4/16/5

A similar procedure to example 1-7 was followed except that vinyl-2-ethylhexanoate was replaced by VeoVa^{™} 10, (from Hexion), and the ratios of vinyl acetate, vinyl benzoate and VeoVa 10 were adjusted. The first monomer mixture comprised 97.41 g of vinyl acetate, 4.87 g of vinyl benzoate and 19.48 g of VeoVa^{™} 10. The second monomer mixture comprised 827.64 g of vinyl acetate, 44.47 g of vinyl benzoate and 177.88 g of VeoVa^{™} 10. The resultant dispersion had a solids content of 49.7%, viscosity of 196 mPa.s, pH of 4.3, grit, (measured on a 40 µ mesh), of 0.012% and a Tg, (onset, by DSC), of 27.6°C.

### Example 1-11: Preparation of a Polymer comprising VA/VB/VeoVaTM 10/NMA-LF 65/5/25/5

A similar procedure to example 1-7 was followed except that vinyl-2-ethylhexanoate was replaced by VeoVa^{™} 10, (from Hexion), and the ratios of vinyl acetate, vinyl benzoate and VeoVa 10 were adjusted. The first monomer mixture comprised 84.41 g of vinyl acetate, 6.09 g of vinyl benzoate and 30.4 g of VeoVa^{™} 10. The second monomer mixture comprised 717.37 g of vinyl acetate, 55.29 g of vinyl benzoate and 277.93 g of VeoVa^{™} 10. The resultant dispersion had a solids content of 49.4%, viscosity of 248 mPa.s, pH of 4.2, grit, (measured on a 40 µ mesh), of 0.004% and a Tg, (onset, by DSC), of 24.0°C.

### Example 1-12: Preparation of a Polymer comprising VA/VB/V2EH/NMA-LF 68.75/10.7/14.3/ 6.25

An aqueous solution was prepared by the addition of 1.33 g of a 30% aqueous solution of a secondary alkane sulfonate anionic surfactant, (Hostapur^{™} SAS 30 from Clariant), and 9.36 g of a 70% aqueous solution of an alcohol ethoxylate nonionic surfactant, (Emulsogen^{™} EPN 287 from Clariant) to 901.5 g of deionized water and heated to 50°C while stirring until the surfactants were dissolved. The solution was cooled and 0.88 g of calcium acetate was added. The reactor was heated to 65°C. A first monomer mixture comprising 87.5 g of vinyl acetate, 13.38 g of vinyl benzoate and 17.88 g of vinyl 2-ethylhexanoate was added to the reactor.

A second monomer mixture comprising 771.88 g of vinyl acetate, 120.38 g of vinyl benzoate and 160.88 g of vinyl 2-ethylhexanoate was prepared. A second aqueous solution was prepared by the addition of 2.68 g of a 30% aqueous solution of a secondary alkane sulfonate anionic surfactant, (Hostapur^{™} SAS 30 from Clariant), and 38.28 g of a 70% aqueous solution of an alcohol ethoxylate nonionic surfactant, (Emulsogen^{™} EPN 287 from Clariant), to 145.08 g of deionized water and heated to 50°C while stirring until the surfactants were dissolved. After cooling the surfactant solution 162.76 g of an approximately 48% active blend of N-methylolacrylamide and acrylamide, (Cylink^{™} NMA-LF from Cytec), was added to the aqueous solution. The second monomer mixture and the second aqueous solution were mixed to form a pre-emulsion.

When the reactor temperature stabilized at 65°C, a solution of 2.67 g of ammonium persulfate in 20.0 g of deionized water was added. When an exotherm was observed, the temperature was increased to 75°C. At 70°C the additions of the pre-emulsion and a solution of 1.74 g of ammonium persulfate + 0.60 g of calcium acetate dissolved in 53.0 g of deionized water were commenced to last 4 hours. After the additions were complete, a solution of 0.11 g of sodium persulfate in 5.87 g of deionized water was added and the temperature was increased to 80°C for 1 hour. The reactor was then cooled to 50°C, and a solution of 2.04 g of t-butyl hydroperoxide in 12.08 g of deionized water was added over 10 minutes. Then a solution of 1.54 g of sodium metabisulfite in 12.08 g of water was added over 10 minutes. The reaction mixture was cooled and filtered through a 180µ mesh.

The resultant dispersion had a solids content of 49.8%, viscosity of 274 mPa.s, pH of 4.3, grit, (measured on a 40 µ mesh), of 0.002% and a Tg, (onset, by DSC), of 29.9°C.

### Example 1-13: Preparation of a Polymer comprising VA/VB/V2EH/NMA-LF 68.75/10.7/14.3/6.25

An aqueous solution was prepared by the addition of 1.33 g of a 30% aqueous solution of a secondary alkane sulfonate anionic surfactant, (Hostapur^{™} SAS 30 from Clariant), and 13.39 g of a 70% aqueous solution of an alcohol ethoxylate nonionic surfactant, (Emulsogen^{™} EPN 287 from Clariant) to 870.0 g of deionized water and heated to 50°C while stirring until the surfactants were dissolved. The solution was cooled and 0.05 g of Mohr's salt was added. Then the aqueous solution was charged to a 3-liter glass reactor equipped with a stirrer and dropping funnels, and purged with nitrogen.

The reactor was heated to 45°C. A first monomer mixture comprising 87.5 g of vinyl acetate, 13.38 g of vinyl benzoate and 17.88 g of vinyl 2-ethylhexanoate was added to the reactor.

A second monomer mixture comprising 771.88 g of vinyl acetate, 120.38 g of vinyl benzoate and 160.88 g of vinyl 2-ethylhexanoate was prepared. A second aqueous solution was prepared by the addition of 2.68 g of a 30% aqueous solution of a secondary alkane sulfonate anionic surfactant, (Hostapur^{™} SAS 30 from Clariant), and 56.25 g of a 70% aqueous solution of an alcohol ethoxylate nonionic surfactant, (Emulsogen^{™} EPN 287 from Clariant), to 150.0 g of deionized water and heated to 50°C while stirring until the surfactants were dissolved. After cooling the surfactant solution 162.76 g of an approximately 48% active blend of N-methylolacrylamide and acrylamide, (Cylink^{™} NMA-LF from Cytec), was added to the aqueous solution. The second monomer mixture and the second aqueous solution were mixed to form a pre-emulsion.

When the reactor temperature stabilized at 45°C, a solution of 0.40 g of sodium metabisulfite in 10.0 g of deionized water was added. Then the simultaneous additions of a solution comprising 4.50 g of ammonium persulfate and 1.00 g of calcium acetate dissolved in 53.0 g of deionized water and a solution comprising 1.85 g of sodium metabisulfite dissolved in 53.0 g of deionized water were commenced at a constant rate to last 5 hours. The reactor temperature was increased to 65°C over 30 minutes, at which point the addition of the pre-emulsion was commenced to last 4 hours. After all of the additions were finished the reactor was then cooled to 50°C, and a solution of 2.04 g of t-butyl hydroperoxide in 12.08 g of deionized water was added over 10 minutes. Then a solution of 1.54 g of sodium metabisulfite in 12.08 g of water was added over 10 minutes. The reaction mixture was cooled and filtered through a 180µ mesh.

The resultant dispersion had a solids content of 49.9%, viscosity of 6060 mPa.s, pH of 4.1, grit, (measured on a 40 µ mesh), of 0.011% and a Tg, (onset, by DSC), of 26.4°C.

### Example 1-14: Preparation of a Polymer comprising VA/VB/V2EH/NMA-LF/CA 69.5/12.5/12.5/5/0.5

An aqueous solution was prepared by the addition of 2.2 g of hydroxyethyl cellulose, having a Brookfield viscosity at 5% concentration of 100-180 mPa.s at 25°C, (Natrosol^{™} 250 LR from Aqualon), and 50.0 g of a 70% aqueous solution of an alcohol ethoxylate nonionic surfactant, (Emulsogen^{™} EPN 287 from Clariant) to 870.0 g of deionized water and heated to 50°C while stirring until the surfactant and HEC were dissolved. The solution was cooled and 8.0 g of a 30% active solution of sodium vinylsulfonate was added. The pH was checked and adjusted to between 4.3 and 4.5 by addition of either phosphoric acid or ammonium hydroxide if necessary. The aqueous solution was then charged to a 3-liter glass reactor equipped with a stirrer and dropping funnels, and purged with nitrogen. The reactor was heated to 35°C and 120.0 g of vinyl acetate was added.

A monomer mixture comprising 468.0 g of vinyl acetate, 106.0 g of vinyl benzoate and 106.0 g of vinyl 2-ethylhexanoate was prepared. An aqueous monomer solution was prepared by the addition of 4.32 g of crotonic acid, 2.0 g of a 29% active solution of ammonium hydroxide and 87.5 g of an approximately 48% active blend of N-methylolacrylamide and acrylamide, (Cylink^{™} NMA-LF from Cytec), to 112.0 g of deionized water.

When the reactor temperature stabilized at 35°C, a solution of 0.44 g of sodium metabisulfite in 6.2 g of deionized water was added. Then the simultaneous additions of a solution comprising 4.54 g of ammonium persulfate dissolved in 48.0 g of deionized water and a solution comprising 2.96 g of sodium metabisulfite dissolved in 41.8 g of deionized water were commenced at a constant rate to last 6 hours. The reactor temperature was increased to 63°C over 30 minutes. When the reactor temperature reached 45°C, the additions of the monomer mixture and the aqueous monomer mixture were commenced as separate feeds to last 5 hours. After 4 hours of monomer additions, the temperature was increased to 75°C and held at that temperature until all additions were complete.

After all of the additions were finished, the reactor was then cooled to 60°C, and a solution of 0.41 g of Rhodoline^{™} 681F, (proprietary defoamer from Rhodia), in 4.0 g of deionized water was added. Then solutions of 0.91 g of t-butyl hydroperoxide in 8.0 g of deionized water and 0.64 g of sodium metabisulfite in 8.0 g of water was added over 30 minutes. The reaction mixture was cooled and filtered through a 180µ mesh.

The resultant dispersion had a solids content of 51.7%, viscosity of 167 mPa.s, pH of 4.3, grit, (measured on a 40 µ mesh), of 0.012% and a Tg, (onset, by DSC), of 27.5°C.

### Example 1-15: Preparation of a Polymer comprising VA/VB/V2EH/NMA-LF/CA 74.5/7.5/12.5/5/0.5

A similar procedure to example 1-14 was followed except that the vinyl acetate and vinyl benzoate amounts were varied. The monomer mixture comprised 510.50 g of vinyl acetate, 63.5 g of vinyl benzoate and 51.2.9%, viscosity of 195 mPa.s, pH of 4.3, grit, (measured on a 40 µ mesh), of 0.009% and a Tg, (onset, by DSC), of 27.0°C.

### Example 1-16: Preparation of a Polymer comprising VA/VB/V2EH/E/NMA-LF 60/10/15/10/5

An aqueous solution was prepared by the addition of 125.8 g of a 10% aqueous solution of hydroxyethyl cellulose, having a Brookfield viscosity at 5% concentration of 100 - 180 mPa.s at 25°C, (Natrosol^{™} 250 LR from Aqualon), 282.6 g of a 70% aqueous solution of a an alcohol ethoxylate nonionic surfactant, (Emulsogen^{™} EPN 287 from Clariant), and 30.5 g of a 30% aqueous solution of a secondary alkane sulfonate anionic surfactant, (Hostapur^{™} SAS 30 from Clariant), to 2984 g of deionized water while stirring. 38.1 g of a 30% active solution of sodium vinylsulfonate was added, followed by 0.19 g of Mohr's salt, then the pH was adjusted to pH 4.4 by the use of phosphoric acid. Then the aqueous solution was charged to a 10-liter pressure reactor equipped with a stirrer, dosage pumps and a mass flow meter for dosing ethylene. The reactor was degassed by twice evacuating, then pressurizing with nitrogen to 2 bar, then finally evacuating.

The reactor was heated to 35°C. 16.76% of a monomer mixture comprising 2891.0 g of vinyl acetate, 480.3 g of vinyl benzoate and 722.7 g of vinyl 2-ethylhexanoate was pumped to the reactor; (both the vinyl benzoate and vinyl 2-ethylhexanoate had been distilled to remove inhibitor and stabilized with 5 ppm MEHQ prior to use). 480.3 g of ethylene was metered to the reactor, followed by 10% of a solution comprising 22.9 g of sodium metabisulfite dissolved in 274.5 g of deionized water.

When the reactor temperature stabilized at 35°C, the additions of a solution of 30.2 g of sodium persulfate dissolved in 274.5 g of deionized water and the remainder of the sodium metabisulfite solution were commenced at a constant rate to last 6 hours. The temperature was gradually increased to 65°C over a period of approximately 20 minutes, at which time the additions of the remainder of the monomer mixture and a solution of 500.3 g of an approximately 48% active blend of N-methylolacrylamide and acrylamide, (Cylink^{™} NMA-LF from Cytec), in 452.9 g of deionized water were added separately to the reactor at a constant rate over 5 hours. The reactor temperature was maintained at 65°C until the monomer mixture and the NMA-LF solution additions were finished, then the temperature was increased to 80°C until all additions were complete.

After the reaction was complete, the reaction mixture was cooled to 50°C and transferred to a degassing vessel. A solution comprising 3.66 g of sodium metabisulfite and 0.09 g of ferrous sulphate heptahydrate in 45.7 g of deionized water was added over 5 minutes, followed by a solution comprising 4.57 g of t-butylhydroperoxide in 45.7 g of deionized water over 30 minutes. The mixture was cooled, then 0.32 g of Agitan^{™} 282 (from Münzing) and 14.64 g of a 12.5% active solution of ammonium hydroxide were added, and the resultant dispersion was filtered through a 180µ mesh. The resultant dispersion had a solids content of 50.4%, viscosity of 4300 mPa.s, pH of 4.5, grit, (measured on a 40 µ mesh), of 0.003% and a Tg, (onset, by DSC), of 3.6°C.

### Example 1-17: Comparative Example A: Preparation of a Polymer comprising VA/NMA-LF 95/5

A similar procedure to example 1-5 was followed except that the vinyl benzoate and vinyl 2-ethylhexanoate were both replaced by vinyl acetate. The resultant dispersion had a solids content of 49.7%, viscosity of 56 mPa.s, pH of 4.4, grit, (measured on a 40 µ mesh), of 0.12% and a Tg, (onset, by DSC), of 35.6°C.

### Application Test Procedures

### General Sample Preparation

The procedure for preparing the test specimens follows: A substrate was dip-nip saturated with the polymer dispersion and then thermally dried. Whatman #1 Filter Paper sheets, commercially available from Whatman, Inc., was used as substrate and stored under controlled temperature (23 °C) and humidity (50%) conditions before use. The filter paper was cut to approximately 265x220 mm sheets and weighed.

The polymer dispersion (incl. 1% mono ammonium phosphate) was diluted to the solids level to achieve an add-on of about 20%. The Whatman filter paper was dip-nip saturated by passing the substrate through the dispersion bath and then passing the saturated sheets through the pressurized nip rolls of a dual roller saturator (Werner Mathis VFM or a similar saturator) to squeeze off the excess polymer dispersion. The saturated sheet was then placed into an oven (Mathis) and dried at 130 °C for 10 min. The saturated, dried sheet was reconditioned at controlled temperature and humidity conditions for a minimum of 12 hours. The sheet was reweighed and then calculated for % add-on.

### Water Spot Test

To test hydrophobicity, with a micropipette, a drop of demineralized water was placed on the sheet and the time was measured till the water was fully absorbed.

### Cobb Test

Cobb test was applied according to DIN EN 20 535 (n.a. in the table means test not applicable due to a too hydrophilic polymer).

### Tensile Strength

Tensile strength was measured according to WSP 110.4 (05) WD. Therefore a 5 cm wide paper strip was clamped in a tensile testing machine (Lloyd LR100K) and a force applied to the sample until break. Specimens to be tested in the wet condition were immersed in water at room temperature for 1 hour and tested when still wet. The tensile strength is the average of at least four measurements.

The relative wet strength was calculated as the ratio of wet tensile strength to dry tensile strength.

### Formaldehyde

Formaldehyde was determined via HPLC from emulsion directly and from sheet after HCHO absorption in water (slight modification of ASTM D5910 / JIS L 1096-979).

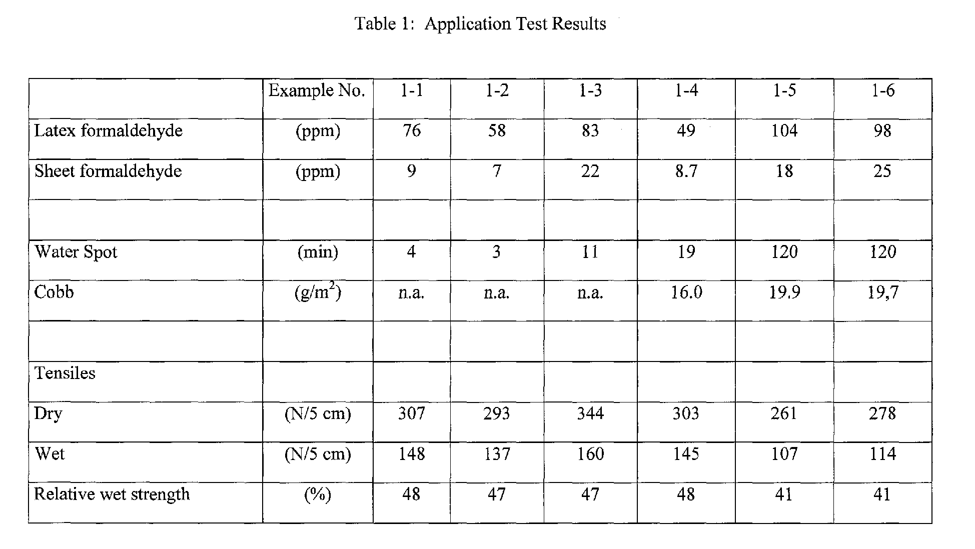

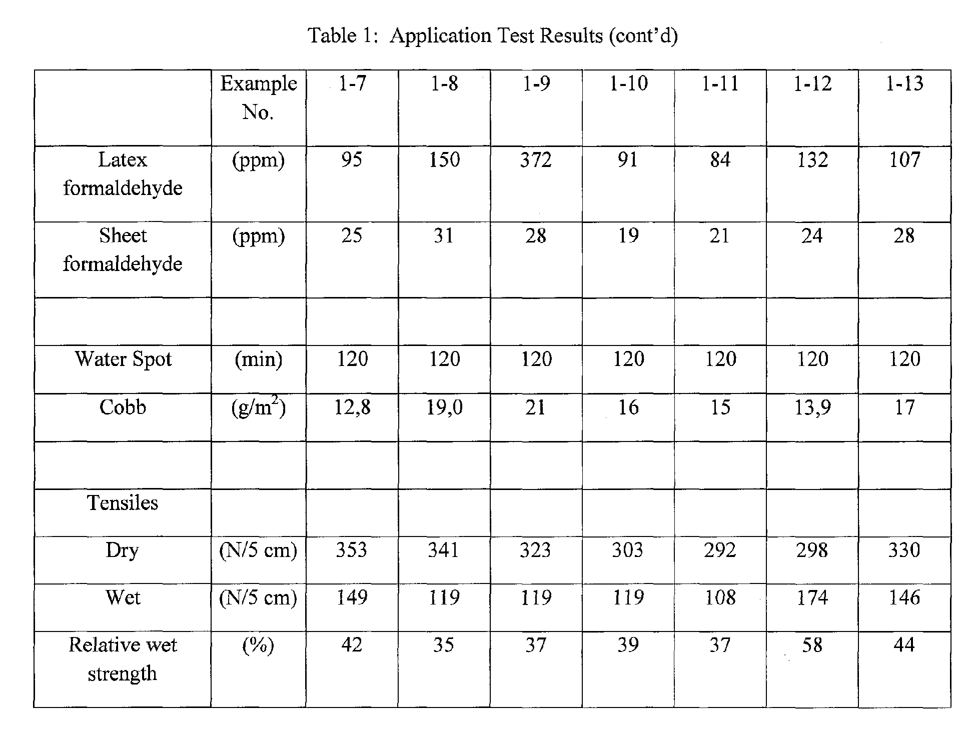

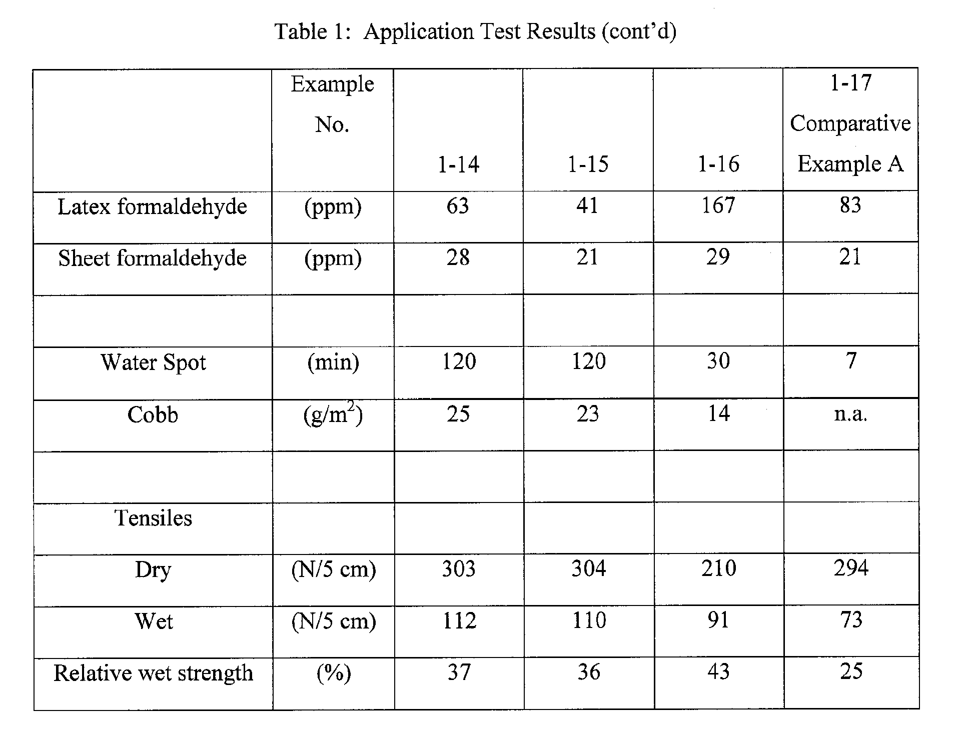

These results show that an improvement in hydrophobicity, wet tensile strength and retention of tensile strength after water soaking has been achieved.

### Woodworking Adhesives using Vinyl Benzoate and Vinyl 2-Ethylhexanoate

Preparation of polymer dispersions for Inventive Examples 2-1 and 2-2 and Comparative Example B.

The experimental apparatus consisted of a cylindrical 3 l glass reactor with anchor stirrer, which was equipped with metering vessels, reflux condenser, jacket heating and cooling, and a temperature measurement and control unit. First of all, a water phase was prepared from 87.6 parts deionized water, 9.2 parts of a partially hydrolyzed polyvinyl alcohol with a degree of hydrolysis of 88 mol % and a Brookfield LVT viscosity as a 4% strength aqueous solution (at 20° C.) of 28 mPa•s. Before the start of the reaction, 0.02 parts of defoamer ®Agitan 280 (Muenzing-Chemie) and 0.03 part of anhydrous sodium acetate as well as 0.3 parts maleic anhydride (as retarder) in 3 parts deionized water were added to this mixture. 0.05 part dibenzoyl peroxide (75 %) was added and the internal temperature was raised to 65° C. During this period, 100 parts of monomer were added slowly under stirring and the polymerization was initiated with the addition of 0.07 parts ammonium peroxodisulfate in 5.5 parts of water which was added at 50 °C. After the kick-off phase, the polymerization was jacket-controlled and run under slight reflux, keeping the reaction temperature between 66-68 °C. After having reached the temperature maximum at high conversion, the jacket temperature was raised and the reactor temperature was kept at 80 °C for one hour. To reduce the residual monomer content, solutions of 0.09 parts sodium metabisulfite in 16.6 parts water and 0.10 parts Trigonox® AW 70 in 7.4 parts water were added at 80 °C and 75 °C, respectively. The reaction mixture was cooled down and kept for 1 h at 50 °C followed by further cooling and pH adjustment to 4.5 by a 10 % sodium hydroxide solution.

The resulting dispersions had the following properties:

**Table 2 - Dispersion Properties**

| | Example 2-1 | Example 2-2 | Comparative Example B |
|---|---|---|---|
| Vinyl acetate (%) | 85 | 70 | 100 |
| Vinyl benzoate (%) | 10 | 20 | - |
| Vinyl 2-ethylhexanoate (%) | 5 | 10 | - |
| Tg (°C) (by DSC) | 43 | 44 | 44 |
| Brookfield RVT 20 rpm, (23 °C) (mPa•s) | 55,200 | 70,800 | 23,050 |
| solids content % | 51.0 | 51.8 | 53.5 |

Formulations with crosslinkers to one part wood adhesives (according to the teaching of United States Patent No. 6,730,718)

100 parts of the above dispersions were adjusted to pH 6 by a 10 % sodium hydroxide solution and admixed with 2.4 parts of butyl diglycol acetate (as film former). Glyoxal bis-sodiumhydrogensulfite was added (which was in situ formed by adding 0.42 parts aqueous glyoxal solution (40 %) and excess sodium metabisulfite solution (1.15 parts in 2.5 parts water). Then 0.62 parts of glutaraldehyde bis-sodiumhydrogensulfite was added in aqueous solution. The mixture was then set to pH 3 using 5.6 parts of a saturated (54 %) solution of aluminum chloride hexahydrate and if necessary with water to a Brookfield RVT viscosity of approx. 4.500 - 8.000 mPa•s at 23 °C. Application testing was started after a ripening period of at least 1 week at room temp. All samples were of good quality and in a workable condition even after a storage period of 20 days at 40 °C.

The wet bond strengths of the adhesives on beech wood test specimens were determined according to European test standard DIN EN 204 for durability class D4. The test specimens were produced in accordance with the procedure described in DIN EN 205. Gluing and testing were carried out subject to the following procedures:

**Table 3: Gluing and Testing Parameters**

| | |
|---|---|
| Glue application: | 150 ± 20 g/m²; application to both sides |
| Open waiting time: | 5 minutes |
| Closed waiting time: | 3 minutes |
| Pressing time: | 2 hours |
| Pressing pressure: | 0.7 ± 0.1 N/mm² |
| Number of test specimens per test sequences | 10 |
| Tested after: | 7 days standard conditions (23 °C, 50 % humidity) |
| Storage sequence according to DIN EN 204 D4/3 (1) or D4/5 (2): | (1) 4 days in cold water (20 +/-5° C.); (2) 6 hours boiling water + 2 hours cold water |
| Test temperature: | 23° C. ± 2° C. |
| Rate of advance: | 50 mm/min. |

**Table 4: Wet Bond Strength Adhesion Test Results**

| Wet bond strengths | Example 2-1 | Example 2-2 | Comparative Example B |
|---|---|---|---|
| D4/3 (N/mm²) | 6.3 | 8.9 | 5.2 |
| D4/5 (N/mm²) | 6.8 | 8.6 | 6.7 |
| Initial viscosity (mPa·s) | 7,900 | 7,750 | 4,900 |
| Visc. after 20 days at 40 °C | 22,100 | 18,500 | 25,850 |

This data show a significant improvement in the wet bond strengths using a comonomer combination of the invention without affecting storage stability.

### Preparation of Vinyl Acetate copolymers with improved wet scrub resistance in high PVC interior paints

### Example 3-1

### Preparation of polymer dispersion

An aqueous solution comprising the following constituents was introduced into a reactor with a stirrer, jacket heating and metering pumps:

| | |
|---|---|
| 985 g | deionized water, |
| 13 g | of a 30 % strengths aqueous solution of commercial PVOH (88% saponification, viscosity of 4% solution: 4cp at 20°C) |
| 53 g | of a 70 % strengths aqueous solution of commercial alkylpolyglycol ether with 28 mol of ethylene oxide and HLB value of 17, |
| 6 g | of a commercial alkylethersulfate |
| 20 g | of a 30% strength aqueous sodium vinylsulfonate solution, and |
| 3g | of sodium acetate |

The following monomer mixture was used:

| | |
|---|---|
| 750g | Vinyl acetate |
| 188g | Vinyl benzoate |
| 312g | Vinyl 2-ethylhexanoate |
| 15g | Glycidylmethacrylate |

The apparatus was freed from atmospheric oxygen and the water phase was heated up to a temperature of 65°C. Then 5% of the monomer mixture was introduced into the apparatus and polymerization was started using 13g of a 5% aqueous solution of sodium persulfate (NaPS). After start of polymerization the temperature was taken to 70°C and the remaining monomer mixture was added over 240min together with another 40g of 5% NaPS aqueous solution. To finish conversion 30min before end of monomer addition the emulsion was heated to 85°C and held at this temperature for 1 hour. Additionally, after end of monomer addition, 30g of 5% NaPS aqueous solution were added over 15min. After the post heating period the reactor was cooled.

The resulting product had a solids content of 53 %, a Brookfield RV (spindle 3, 20 rpm, 23 °C) viscosity of 4810 mPa•s and pH value of 4.2 and a glass transition temperature of 25 °C (midpoint), measured by Differential Scanning Calorimetry.

### Example 3-2

### Preparation of polymer dispersion

An aqueous solution comprising the following constituents was introduced into a reactor with a stirrer, jacket heating and metering pumps:

| | |
|---|---|
| 540 g | deionized water |
| 3.5 g | of a 70% strength aqueous solution of commercial alkylpolyglycol ether with 28 mol of ethylene oxide and HLB value of 17 |
| 6 g | of a commercial alkylethersulfate with 2EO |
| 13 g | of a 30% strength aqueous sodium vinylsulfonate solution |
| 2.5g | of sodium acetate |
| and | |
| 2.5g | of sodium metabisulfite (SMBS) |

The monomer was added in form of a pre-emulsion consisting of:

| | |
|---|---|
| 535 g | deionized water |
| 18 g | of a 70 % strength aqueous solution of commercial alkylpolyglycol ether with 28 mol of ethylene oxide and HLB value of 17 |
| 34 g | of a commercial alkylethersulfate with 2EO |
| 14 g | of a 30% strength aqueous sodium vinylsulfonate solution |
| 1.8 g | sodium bicarbonate |
| 3 g | sodium persulfate |
| 840g | Vinyl acetate |
| 100g | Vinyl benzoate |
| 260g | Vinyl 2-ethylhexanoate |
| 15g | Glycidylmethacrylate |

The apparatus was freed from atmospheric oxygen and the water phase was heated up to a temperature of 65°C. Then 5% of the monomer emulsion was introduced into the apparatus and polymerization was started using 6g of a 3% aqueous solution of sodium persulfate (NaPS). After start of polymerization the temperature was taken to 70°C and the remaining monomer mixture was added over 240 min. After the monomer mixture addition, another 25g of 1.5% NaPS aqueous solution as well as 25g of a 1.5% SMBS solution were added and the emulsion was heated to 75°C and held at this temperature for 1 hour. After the post heating period, the reactor was cooled and the cold emulsion was adjusted to pH 6 using ammonia.

The resulting product had a solids content of 50 %, a Brookfield RV (spindle 1, 20 rpm, 23 °C) viscosity of 160 mPa•s and ph value of 6 and a glass transition temperature of 30 °C (midpoint), measured by Differential Scanning Calorimetry.

### Example 3-3

### Preparation of polymer dispersion

An aqueous solution comprising the following constituents was introduced into a reactor with a stirrer, jacket heating and metering pumps:

| | |
|---|---|
| 1100 g | deionized water |
| 35 g | of a 70 % strengths aqueous solution of commercial alkylpolyglycol ether with 28 mol of ethylene oxide and HLB value of 17 |
| 13 g | of a commercial alkylethersulfate |
| 20 g | of a 30% strength aqueous sodium vinylsulfonate solution |
| and | |
| 3g | of sodium acetate |

The following monomer mixture was used:

| | |
|---|---|
| 1000g | Vinyl acetate |
| 30g | Vinyl benzoate |
| 235g | Vinyl 2-ethylhexanoate |
| 19g | Glycidylmethacrylate |

The apparatus was freed from atmospheric oxygen and the water phase was heated up to a temperature of 60°C. Then 5% of the monomer mixture was introduced into the apparatus and polymerization was started using 35g of an 8% aqueous solution of sodium persulfate (NaPS) together with 17g of a 6% aqueous solution of SMBS. 15 minutes after the start of polymerization the remaining monomer mixture was added over 240 min. To finish the conversion after the end of the monomer addition the emulsion was heated to 85°C and held at this temperature for 1 hour. Additionally, after the end of the monomer addition, 30g of 4% NaPS aqueous solution were added. After the post heating period the reactor was cooled. As post additions, 250g of an aqueous solution containing: 8% of a sodium salt of a styrene maleic anhydride, 16% of a ethyleneoxide-propylene oxide block polymer with 10% EO (HLB2), and 2.5% of a commercial alkylethersulfate with 7 mol of ethylene oxide.

The resulting product had a solids content of 51 %, a Brookfield RV (spindle 3, 20 rpm, 23 °C) viscosity of 200 mPa•s and pH value of 6 and a glass transition temperature of 24 °C (midpoint), measured by Differential Scanning Calorimetry.

### Comparative Examples C and D

### Polymer dispersions

Acronal® 290 D, a styrene acrylic copolymer emulsion; the emulsion according to the technical data sheet had a Tg of 22 °C, a solids content of 50% and a Brookfield viscosity of 1100 mPa•s and a pH value of 8.

Mowilith® LDM 2383, a copolymer emulsion based on vinyl acetate and ®VeoVa (vinyl ester of versatic acids); the emulsion according to the technical data sheet has a Tg of 29 °C, a solids content of 53 % and a Brookfield viscosity of 1500 mPa•s and a pH value of 4.5.

### Test of the Wet scrub resistance

The wet scrub resistance was tested according to DIN 53778 in the following paint formulation for a matt interior paint containing 10% binder.

**Table 5: Paint Composition**

| | |
|---|---|
| Water | 304g |
| Methylhydroxyethylcellulose 30000 mPa·s (5%ig) | 4g |
| Sodium polyphosphate | 5g |
| Potassium polyacrylate | 4g |
| Defoamer (Mineral oil, hydrophobic silica) | 2g |
| Biocide | 2g |
| NaOH | 2g |
| Titanium dioxide (Rutile R3, 82% TiO2, Al, Si coating) | 83g |
| Kaolin 2.5µm | 36g |
| Calcium Carbonate 2 µm | 243g |
| Calcium Carbonate 5 µm | 212g |
| Emulsion (50% solids content) | 100g |
| Coalescent (2,2,4-trimethyl-1,3- | 2.5g |
| pentandiolmonoisobutyrate) | |

The results are summarized in the table below.

**Table 6: Wet Scrub Resistance Test Results**

| | Scrub Cycles (DIN 53778) |
|---|---|
| Comparative C: Acronal® | 672 |
| 290 D | |
| Comparative D: Mowilith® | 875 |
| LDM 2383 | |
| Example 3-1 | 1507 |
| Example 3-2 | 1642 |
| Example 3-3 | 1944 |

These results document an unexpected and surprising improvement in wet scrub resistance of the inventive examples over the commercial comparisons.

While the invention has been described in detail, modifications within the spirit and scope of the invention will be readily apparent to those of skill in the art. In view of the foregoing discussion, relevant knowledge in the art and references discussed above in connection with the Background and Detailed Description, the disclosures of which are all incorporated herein by reference, further description is deemed unnecessary. In addition, it should be understood that aspects of the invention and portions of various embodiments may be combined or interchanged either in whole or in part. Furthermore, those of ordinary skill in the art will appreciate that the foregoing description is by way of illustration only, and is not intended to limit the invention.

## Claims

1. A binder resin for fibrous substrates such as woven or nonwoven products including textiles, apparel in general, papers, scrim, engineered fabrics, glass or other mineral fibers, roofing or flooring materials, said binder resin comprising a copolymer obtainable by reacting:
a) 3-97 pphwm of vinyl acetate;
b) 97-3 pphwm of at least one vinyl ester of an aromatic carboxylic acid; and
c) 10-0.1 pphwm of at least one functional monomer; and optionally
d) 50-1 pphwm of at least one vinyl ester of α-monosubstituted fatty acids; and/or
e) 35 - 5 pphwm of at least one α-olefin; and/or
f) 45-5 pphwm of at least one vinyl ester of neoalkanoic acid; and/or
g) other comonomers.

2. The binder resin as claimed in Claim 1, comprising a copolymer obtainable by reacting from 30-95 pphwm of vinyl acetate.

3. The binder resin as claimed in Claim 1, comprising a copolymer obtainable by reacting from 60-4 pphwm of at least one vinyl ester of an aromatic carboxylic acid.

4. The binder resin as claimed in Claim 3, wherein the vinyl ester of an aromatic carboxylic acid is vinyl benzoate.

5. The binder resin as claimed in Claim 1, wherein said at least one functional monomer is a crosslinking monomer.

6. The binder resin as claimed in Claim 5, wherein said crosslinking monomer is a self-crosslinking monomer.

7. The binder resin a claimed in Claim 6, comprising a copolymer obtainable by reacting from 8-2 pphwm self-crosslinking monomer.

8. The binder resin a claimed in Claim 7, wherein said self-crosslinking monomer is N-methylolacrylamide.

9. The binder resin as claimed in Claim 1, wherein the vinyl ester of α-monosubstituted fatty acid is vinyl 2-ethyl hexanoate.

10. The binder resin as claimed in Claim 9, comprising a copolymer obtainable by reacting from 30-5 pphwm of vinyl 2-ethyl hexanoate.

11. The binder resin as claimed in Claim 1, wherein the α-olefin is a C₂ to C₄ α - olefin.

12. The binder resin as claimed in Claim 11, wherein the α -olefin is ethylene.

13. The binder resin as claimed in Claim 1, wherein the vinyl ester of neoalkanoic acid is of the structural formula: 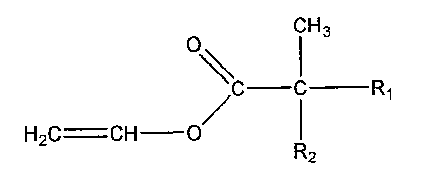 where R₁ and R₂ are alkyl groups which together may collectively contain from about 6-8 carbon atoms.

14. The binder resin as claimed in Claim 13, wherein R₁ and R₂ collectively contain 7 carbon atoms.

15. A fibrous product comprising:
a) a fibrous substrate selected from woven or nonwoven products including textiles, apparel in general, papers, scrim, engineered fabrics, glass or other mineral fibers, roofing or flooring materials; and
b) a binder resin comprising a copolymer obtainable by reacting (i) 3-97 pphwm of vinyl acetate; (ii) 97-3 pphwm of at least one vinyl ester of an aromatic carboxylic acid; (iii) 10-0.1 pphwm of at least one functional monomer, and optionally (iv) 50-1 pphwm of at least one vinyl ester of α-monosubstituted fatty acids; and/or (v) 35 - 5 pphwm of at least one α-olefin; and/or (vi) 45-5 pphwm of at least one vinyl ester of neoalkanoic acid; and/or (vii) other comonomers.
